## Europäisches Patentamt

(19) ## European Patent Office

## Office européen des brevets

(11) Numéro de publication: **0 125 184**

**B1**

(12) # FASCICULE DE BREVET EUROPÉEN

(45) Date de publication du fascicule du brevet:
**12.08.87**

(51) Int. Cl.⁴: **F 23 D 14/22,** C 03 B 5/235

(21) Numéro de dépôt: **84400918.3**

(22) Date de dépôt: **04.05.84**

(54) **Brûleur, en particulier brûleur à gaz pour installations de chauffe industrielles, et tête de brûleur associée.**

(30) Priorité: **04.05.83 DE 3316323**

(43) Date de publication de la demande:
**14.11.84 Bulletin 84/46**

(45) Mention de la délivrance du brevet:
**12.08.87 Bulletin 87/33**

(84) Etats contractants désignés:
**BE CH DE FR IT LI LU NL**

(56) Documents cité:
**FR-A-875 058**
**FR-A-2 317 593**
**US-A-2 942 655**
**US-A-3 697 000**
**US-A-4 261 518**

**GLASS AND CERAMICS, vol. 37, no. 11/12,
novembre/décembre 1980, Plenum Publishing
Corporation, New York (US); A.S. KOZLOV et
al.:"Optimum construction of burner ports in the
glass furnaces" , pages 536-538**

(73) Titulaire: **ISOVER SAINT- GOBAIN, Les Miroirs 18,
avenue d'Alsace, F-92400 Courbevoie (FR)**

(72) Inventeur: **Mess, Lothar, Hansaremsgasse 9, D-5013
Elsdorf 3 (DE)**

(74) Mandataire: **Frèrejean, Jacques, Saint- Gobain
Recherche 39, quai Lucien Lefranc, F-93304
Aubervilliers (FR)**

LIBER, STOCKHOLM 1987

## Description

La présente invention concerne une tête de brûleur, en particulier un brûleur à gaz pour installations de chauffe industrielles, selon le préambule de la revendication 1, ainsi qu'une brûleur comportant une telle tête de brûleur.

Une exigence fréquente, en particulier dans le cas de brûleurs industriels, réside dans le fait qu'une quantité de chaleur élevée par unité de temps doit être introduite dans un espace donné. Ceci suppose la combustion d'une quantité de combustible d'une importance correspondant à la quantité d'air présente dans un rapport stoechiométrique. Cette combustion qui s'effectue dans une flamme de brûleur et qui produit la quantité de chaleur souhaitée donne, pour des vitesses d'écoulement correspondantes du combustible et de l'air comburant, dans le cas d'un brûleur donné, une longueur de flamme déterminée, des conditions de combustion différentes se présentant en règle générale sur la longueur de la flamme et l'opération de combustion qui produit la chaleur ne se terminant que dans la pointe de la flamme.

Dans le cas où l'espace disponible est restreint, on peut éprouver des difficultés parce que, pour un brûleur donné, la quantité de combustible et la quantité d'air correspondant à la quantité de chaleur nécessaire donne une flamme trop longue, dont la pointe à température élevée parvient en des endroits qui ne doivent pas être soumis à une telle charge thermique. Un exemple de ces conditions se rencontre dans le cas du chauffage d'un bassin de fusion de verre qui en régle générale a une forme rectangulaire et est fréquemment garni, le long de ses côtés longitudinaux, de plusieurs brûleurs débouchant au-dessus du niveau de la matière fondue, les flammes de ces brûleurs étant dirigées les unes vers les autres. Si, dans une telle configuration, on atteint une longueur de flamme trop importante, les flammes situées des deux côtés longitudinaux du bassin sont décalées, se rencontrent dans une zone médiane du bassin et sont déviées vers le haut dans la zone médiane du bassin par le flux d'air de forme cylindrique qui s'y établit, de sorte que la voûte du bassin est soumise à une charge thermique importante et s'use trop rapidement. Une diminution de la longueur des flammes telle que les pointes des flammes ne puissent plus être déviées vers le haut dans la zone du milieu du bassin, suppose, dans le cas d'une même disposition des brûleurs considérée comme optimale, une diminution de l'alimentation en combustible et en air, à la suite de quoi la quantité de chaleur introduite dans la zone du bassin par unité de temps descend en dessous de la valeur souhaitée. Il va de soi que l'on utilise dans ce cas des brûleurs qui donnent une flamme plus courte la plus intense possible de telle sorte qu'un raccourcissement des flammes pour une même puissance des brûleurs est à exclure. Etant donné que d'autre part, la puissance globale du brûleur est donnée au préalable par l'absorption d'énergie de la matière à fondre, une diminution sensible de l'alimentation en combustible visant à diminuer la longueur de la flamme est aussi à exclure de sorte que, si la géométrie d'ensemble du bassin n'est pas modifiée quelque peu par un élargissement aux dépens de la longueur, on ne peut tenir compte de la charge trop élevée de la voûte du foyer que par des réparations d'une fréquence accrue de manière correspondante qui, à la suite de l'arrêt nécessaire du bassin, occasionnent des frais extrêmement élevés.

Il est évident que dans d'autres cas d'utilisation de brûleurs également en particulier dans le domaine industriel, une longueur de flamme s'établissant pour une puissance de brûleur donnée s'avère désavantageuse d'une manière analogue, mais ne peut pas être évitée dans le cas d'une puissance de brûleur prédéterminée.

Dans la mesure où l'air de combustion n'est préchauffé, par exemple par échange de chaleur avec le gaz brûlé dans de tels brûleurs, qu'à environ 700°, l'alimentation de l'air de combustion peut s'effectuer concentriquement à la tête du brûleur et ainsi symétriquement par rapport au combustible. Ceci assure un mélange optimum de l'air de combustion et du combustible. Cependant, lorsqu'un préchauffage plus important de l'air de combustion peut ête réalisé, ce qui doit en principe être recherché, de sorte que l'on dispose ainsi d'air de combustion à une température de plus de 700°C, le cas échéant même de plus de 1000°C, il n'est plus possible, à cause de la limitation de la charge thermique de la matière de la tête du brûleur, habituellement de l'acier, d'amener l'air de combustion directement à la tête du brûleur. L'air de combustion est alors amené dans un canal maçonné, au-dessus de la tête du brûleur à la base des flammes, l'axe de la tête du brûleur étant en règle générale légèrement incliné vers le haut d'environ 11°, tandis que l'axe du canal d'alimentation de l'air de combustion est incliné vers le bas sous un angle aigu, de 22° par exemple, afin de favoriser ainsi une pénétration réciproque du combustible et de l'air de combustion. En raison de l'alimentation non symétrique moins favorable de l'air de combustion dans de tels brûleurs, dits brûleurs sous banquette ou encore brûleurs à injecteur sous veine d'air, le combustible et l'air de combustion doivent cependant parcourir un trajet commun relativement grand pour produire une combustion complète, ce qui donne une flamme comparativement longue qui fréquemment n'est pas souhaitée. Pour atteindre déjà une précombustion au moins au voisinage immédiat de la tête du brûleur, avant que la masse de l'air de combustion pénètre dans le jet de combustible, et pour obtenir de cette façon un certain raccourcissement de la flamme, il est connu d'amener volontairement à la périphérie de la tête du brûleur de l'air dit parasite, qui n'est pas préchauffé. La longueur de la flamme n'est de ce fait cependant raccourcie que de manière insignifiante et elle est encore beaucoup trop grande dans de nombreux cas d'application, tandis que l'air primaire froid aspiré influence défavorablement l'efficacité du brûleur.

L'invention a pour but, au départ d'une tête de brûleur du type décrit dans le préambule de la revendication 1 décrit par exemple dans le document FR-A- 24 58 749, de procurer une tête de brûleur qui, pour une puissance donnée et pour un type donné d'alimentation en air, donne une flamme extrémement courte à combustion intense.

Une tête de brûleur selon l'invention, en particulier de brûleur à gaz pour installations de chauffe industrielle est fixée à l'extrémité d'un conduit alimentation pour combustible comportant un corps cylindrique ayant un canal central et est caractérisée en ce que le canal central présente du côté des flammes une paroi frontale délimitant une chambre interne servant de collecteur de combustible, la paroi frontale présentant une série d'au moins trois ouvertures de sortie du combustible, de configuration indentique, disposées symétriquement par rapport à l'axe du corps cylindrique, les axes centraux des ouvertures de sortie se rencontrant en un point situé sur le prolongement de cet axe et formant avec cet axe, en direction de la paroi frontale, des angles aigus égaux et compris entre 15 et 75°.

On obtient ainsi que le combustible provenant d'une chambre interne de la tête de brûleur servant de collecteur de combustible et fermée par la paroi frontale de la tête de brûleur, passe à une vitesse élevée par les ouvertures de sortie de combustible sous la forme de jets symétriques discrets, ces jets de combustible se rencontrant en un point situé sur l'axe du brûleur avec une énergie cinétique élevée. Etant donné que la position et l'orientation des ouvertures de sortie du combustible sont entièrement symétriques par rapport à l'axe du brûleur, une fine dispersion des particules de combustible se produit au point de rencontre des jets sur l'axe du brûleur avec formation d'un cône de combustible ouvert à une certaine distance de l'embouchure du brûleur et rempli de manière homogène de particules de combustible. L'air préchauffé alimentant la combustion est sollicité en aval de la paroi frontale de la tête du brûleur par la forte dépression locale produite par les jets de combustible sortant des ouvertures de sortie et est dévié en direction de l'axe du brûleur dans le cône formé par les jets de combustible derrière le point de rencontre et est mélangé en cet endroit d'une manière extrêmement intense avec les fines particules de combustible qui tendent à s'éloigner de l'axe du brûleur. Dans le cas particulier d'une alimentation concentrique de l'air de combustion, on obtient ainsi une entrée de tous côtés de l'air de combustion dans le cône de combustible et un mélange en substance absolument homogène. On parvient de cette façon à produire d'une manière étonnante une combustion si intense qu'à l'oeil nu, une flamme n'est plus du tout perceptible, car cette flamme, à cause de la densité d'énergie élevée, ne produit plus que des rayons situés dans le domaine ultraviolet. Cette intensité de combustion extraordinairement élevée entraîne un raccourcissement correspondant de la durée de la combustion et ainsi de la longueur de la flamme, de sorte que la puissance calorifique exigée peut être obtenue à l'aide d'une flamme d'autant plus courte.

Des ouvertures de sortie dirigées radialement vers l'intérieur de brûleurs sont bien connues dans le cas de brûleurs à écoulement tourbillonnaire, comme décrit par exemple dans la demande de brevet international 80/02452. Indépendamment du fait que, dans ce cas, ce ne sont pas les jets de combustible, mais les jets d'air de combustion qui passent par des ouvertures de sortie orientées de manière correspondante, les axes centraux des ouvertures de sortie ne sont cependant pas dirigés exactement vers un point commun de l'axe du brûleur, mais sont plutôt déjetés par rapport à l'axe du brûleur, afin de produire un écoulement tourbillonnaire autour de cet axe. Le phénomène d'une conjonction entièrement symétrique de jets de combustible semblables sur un point de l'axe du brûleur, qui est utilisé dans le cadre de l'invention pour former un cône à remplissage homogène de particules de combustible finement divisées, ne se présente pas dans ce cas-ci, car les jets tourbillonnaires ont une allure certes courbée, mais restent séparés sous la forme de jets discrets et ne se dispersent que peu, de sorte qu'ils ne permettent qu'une combustion selon le mode classique.

Le brevet FR-A-2 317 593 décrit pour sa part un brûleur ayant un tube central d'alimentation en combustible entouré coaxialement par un dispostif d'alimentation en comburant agencé de telle façon que le comburant est dirigé suivant une hyperboloïde qui enveloppe le flux cylindrique du comburant. Ce dispositif permet de conférer une composante de rotation au flux de comburant mais ne favorise pas le raccourcissement de la flamme. Le brevet FR-A-875 058 décrit un brûleur alimenté avec un gaz de combustible mélangé à l'air qui comporte plusieurs points de sortie des flammes disposés de façon à ce que les flammes s'unissent suivant une ligne d'intersection. La longueur de la flamme est alors diminuée mais ce brûleur ne fournit pas une combustion très intense et rapide.

Dans la technique des filtres, il est connu de diriger deux jets de liquide de lavage à grande vitesse l'un contre l'autre et ainsi de les pulvériser d'une manière extrêmement fine, pour accrocher au moyen des particules de liquide pulvérisées des particules de matière solide contenues dans le flux de gaz et les séparer. Des exemples de telles réalisations sont donnés dans les documents FR-A- 22 78 379 ou 23 59 626 ou EP-A- 62 586. On utilise dans ce cas manifestement un mécanisme d'action semblable à celui qui est utilisé dans le cas de l'invention pour diviser finement le combustible dans l'espace, parce que dans ce cas également, on produit régulièrement un rideau de liquide plat au moyen de deux jets de liquide seulement. Une telle configuration plate de la zone de pulvérisation ne peut pas être utilisée dans le cas d'un brûleur à alimentation en air de combustion massive, car dans ce cas il serait produit un dard d'une largeur correspondant à peu près à sa hauteur, à l'intérieur duquel une quantité de chaleur importante serait libérée à haute température. La vive allure souhaitée de l'opération de combustion suppose dès lors une flamme compacte et exclut un mince rideau de particules de combustible qui brûlent, étant entendu qu'en outre, dans les zones latérales d'un tel rideau plat, on ne peut certainement pas obtenir un mélange suffisamment homogène des particules de combustible et de l'air de combustion. C'est pourquoi un brûleur conforme à l'invention travaille avec au moins trois jets de combustible, de préférence avec quatre jets de combustible, qui sont disposés d'une manière entièrement symétrique et qui donnent de manière étonnante une répartition des particules sans différence aucune dans le cône de pulvérisation spacial ainsi formé, de sorte qu'en particulier dans le cas d'une alimentation concentrique de l'air de combustion, on obtient des rapports de mélange et de combustion entièrement égaux partout autour de l'axe du brûleur.

Indépendamment de cette différence fondamentale, il n'était pas non plus prévisible, sur la base des connaissances en matière de pulvérisation de liquide de lavage que, par exemple dans un conduit de fumée, moyennant une modification correspondante du principe d'action physique appliquée à cet endroit à des jets de combustible dans une brûleur, l'intensification de la combustion et le raccourcissement sentible de la flamme décrits ci-dessus pourraient être atteints. Cette intensification considérable de la combustion est due essentiellement à la forte dépression atteinte entre la paroi frontale de la tête du brûleur et le point de conjonction des jets de combustible en avant de la tête du brûleur, cette dépression aspirant l'air de combustion dans le cône de pulvérisation de combustible formé. Ce phénomène, d'une part, n'apparaît pas dans une mesure correspondante lors de la production d'un rideau de pulvérisation essentiellement bidimentionnel et serait, d'autre part, inutile dans le cas de la production d'un tel rideau de liquide de lavage dans un flux de fumée.

Les revendications 2 à 7 ont pour objet des caractéristiques avantageuses d'une tête de brûleur conforme à l'invention.

Une telle tête de brûleur est un élément autonome qui, en vue d'obtenir l'efficacité d'un brûleur conforme à l'invention, peut aussi être incorporé dans un brûleur existant. En effet, une conversion du chauffage d'un bassin de fusion de verre par passage de brûleurs classiques à des brûleurs conformes à l'invention exige simplement la fixation d'une telle tête de brûleur sur le tube d'alimentation de gaz présent, concentriquement à l'intérieur d'un conduit d'alimentation d'air de combustion existant, et en outre, des manipulations de réglage prévues dans le cas du brûleur standard pour régler la flamme peuvent être évitées, car le brûleur ne nécessite aucune mesure de réglage lorsqu'il est équipé d'une tête de brûleur conforme à l'invention.

D'autres détails, particularités et avantages de l'invention ressortiront de la description d'une forme d'exécution donnée ci-après à titre d'exemple avec référence aux dessins annexés dans lesquels:

la figure 1 est une vue en coupe d'un bassin de fusion de verre chauffé par des brûleurs conformes à l'invention et illustre un cas d'application particulièrement adéquat d'un brûleur conforme à l'invention;

la figure 2 illustre le détail du cercle II de la figure 1, à échelle fortement agrandie, le brûleur conforme à l'invention étant représenté en coupe longitudinale;

la figure 3 est une vue de la tête du brûleur représentée sur la figure 2 en grandeur nature, illustrant le cône de pulvérisation obtenu au cours d'un essai à l'eau, donc sans l'influence de l'air de combustion amené concentriquement dans le cas du brûleur représenté sur la figure 2; est une vue en coupe fragmentaire d'un bassin de fusion équipé d'un brûleur dit brûleur sous banquette dans le cas duquel l'air de combustion est amené par un conduit maçonné à partir d'un endroit situé au-dessus de la flamme.

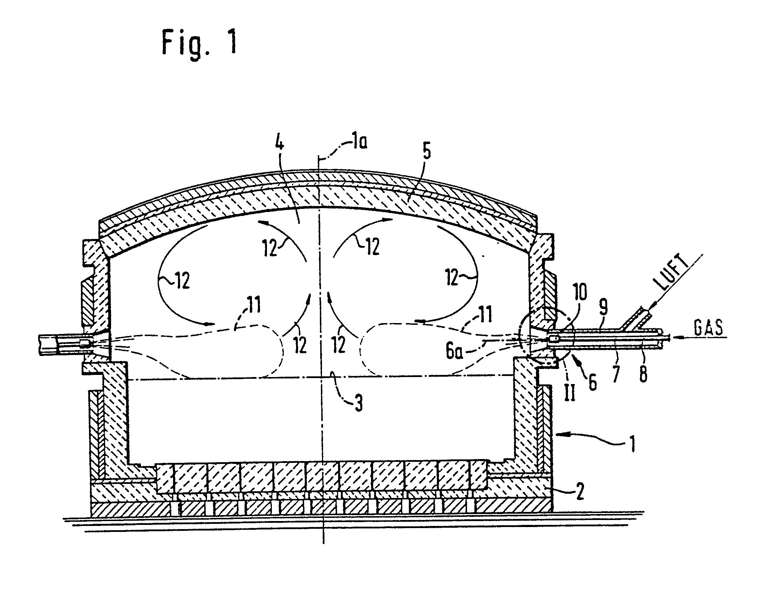

Pour expliquer un cas d'application déjà éprouvé en service pour un brûleur conforme à l'invention, une vue en coupe d'un bassin de fusion du verre 1 est donnée sur la figure 1. Le bassin de fusion du verre 1 pourrait, dans cet exemple, avoir une largeur b de 4,60 m et une longueur de 15 m perpendiculairement au plan du dessin et est constitué d'une cuve 2 destinée à recevoir la masse de verre fondu dont le niveau est indiqué en traits interrompus en 3 et d'une chambre de chauffe 4 qui sert à chauffer la masse de verre fondu par le haut et qui est fermée à sa partie supérieure par une voûte 5 en matière réfractaire. Sur les deux côtés longitudinaux du bassin de fusion du verre 1 peuvent être installés, dans cet exemple, chaque fois 35 brûleurs du type décrit en détail plus loin, qui comportent, dans cet exemple, un conduit d'alimentation 7 pour le combustible, dans ce cas-ci du gaz, concentrique à leur axe 6a, ayant la forme d'un tube 8 et un conduit d'alimentation 9 pour de l'air de combustion préchauffé disposé concentriquement autour du tube 8, ainsi qu'une tête de brûleur 10 du type décrit plus en détail plus loin, dans la zone de l'embouchure du brûleur. L'air de combustion est préchauffé par échange thermique avec les fumées évacuées de la chambre de chauffe 4 d'une manière connue, non représentée en détail, à une température voisine de 600° C et est amené ainsi au conduit d'alimentation 9 de l'air de combustion et par ce moyen au brûleur 6.

D'une manière expliquée encore plus en détail plus loin, le brûleur 6 conforme à l'invention produit une courte flamme intense 11, comme l'illustre schématiquement la figure 1. Dans la zone de l'axe médian 1a du bassin de fusion, les deux flux de gaz introduits par les brûleurs 10 situés de chaque côté du bassin de fusion du verre 1, se rencontrent et remontent dans le sens des flèches 12 en direction de la voûte 5, où ils sont à nouveaux déviés vers l'extérieur et forment les rouleaux de gaz illustrés schématiquement par les flèches 12 sur le dessin. Le rouleau de gaz 12 est disposé dans un courant longitudinal dans la chambre de chauffe 4 en direction de la cheminée d'évacuation de sorte que les fumées chaudes s'écoulent des deux côtés de l'axe longitudinal médian 1a du bassin de fusion de verre 1 dans la chambre de chauffe en hélice vers la cheminée d'évacuation. Le rouleau de gaz selon les flèches 12 maintient alors la flamme 11 dans la zone de la surace 3 de la masse de verre fondu de sorte qu'un transfert de chaleur intense se produit en cet endroit.

Comme cela ressortira clairement sans plus, les flux de gaz chauds qui se rencontrent dans la zone de l'axe longitudinal médian 1a, entrent en contact avec la face interne de la voûte 5 et la sollicitent thermiquement. Lorsque la combustion dans la flamme 11 se déroule plus lentement que sur la figure 1 et qu'ainsi la flamme 11 est allongée d'autant pour la combustion complète du combustible, les deux flux de gaz se rencontrent dans une zone dans laquelle il y a encore combustion. Les deux extrémités de flamme sont alors déviées vers le haut par l'écoulement gazeux 12 de sorte qu'immédiatement avant l'arrivée des gaz sur la voûte 5, il y a encore combustion avec une température de gaz élevée correspondante. La voûte 5 est de cette façon sollicitée outre mesure et doit être réparée à des intervalles relativement rapprochés.

En ce qui concerne les sollicitations qui apparaissent, il convient de noter que, dans le cas illustré, une sollicitation de la chambre de chauffe dans la section considérée, par les brûleurs 6 dans l'exemple considéré de 80 kcal/m³s, apparaît et que cette solliciation est nécessaire pour fournir la quantité de chaleur souhaitée à la masse fondue 3. A cet effet, dans la zone de la tête 10 du brûleur, environ 100 m³/heure de gaz et environ 1000 m³/heure d'air de combustion sont introduits, par brûleur, dans la chambre de chauffe 4 et sont brûlés dans la flamme 11 concernée; pour obtenir une production journalière du bassin de fusion de verre 1 de 200 tonnes de verre fondu, il faut donc que les 70 brûleurs au total brûlent par seconde une quantité de gaz d'environ 2 m³ associée à la quantité d'air de combustion qui est le décuple de celle-ci. L'air de combustion passe dans ce cas par le conduit d'alimentation 9 à une vitesse d'environ 30 m/seconde, ce qui correspond à une entrée à environ 100 km/heure dans la chambre de chauffe 4 d'une section d'environ 9 m², de sorte que la flamme 11 formée dans le mélange de combustible et d'air est déjà totalement en contact avec la face interne de la voûte 5 lorsque la combustion n'a encore qu'une durée d'environ 1 seconde, si bien que la combustion visant à obtenir des flammes plus courtes 11 doit être complètement terminée en des fractions de seconde.

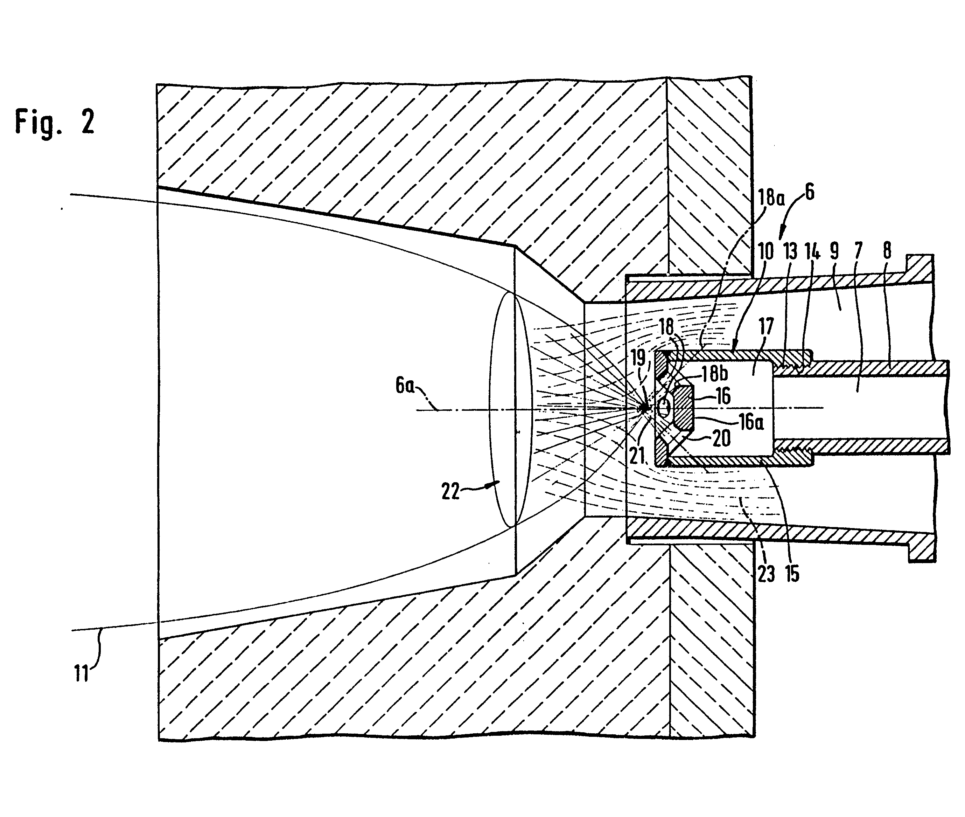

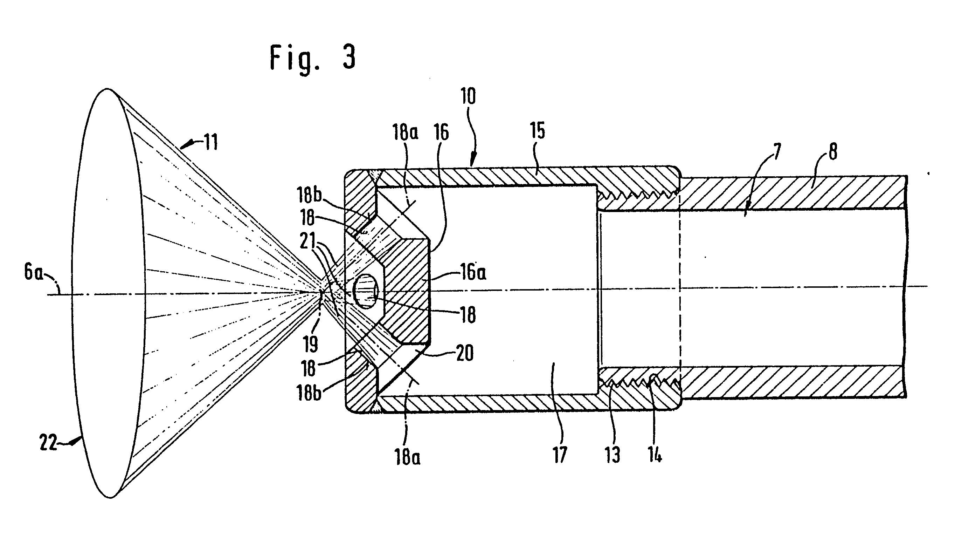

Des brûleurs connus ne permettent pas d'atteindre une combustion aussi rapide, telle qu'elle peut l'être au moyen d'un brûleur conforme à l'invention, représenté plus en détail sur la figure 2 et dont la tête 10 est illustrée en détail et en grandeur nature sur la figure 3 au cours d'un essai à l'eau.

A l'extrémité antérieure du tube 8 entourant le conduit d'alimentation 7 pour le combustible est prévu un pas de vis extérieur 13 sur lequel est vissé un pas de vis intérieur 14 prévu à l'extrémité postérieure de la tête 10 du brûleur. La tête 10 du brûleur comprend un corps cylindrique 15, qui présente le pas de vis intérieur 14 et qui peut être fabriqué d'une manière simple par usinage au tour, et une paroi frontale 16, qui, du côté du corps cylindrique 15 opposé au pas de vis 14, ferme une chambre intérieure 17 de la tête de brûleur 10 servant de collecteur de combustible. La paroi frontale 16, qui peut être soudée au corps cylindrique 15 de la manière illustrée, est pourvue d'un renfoncement en forme de coupelle dont le fond 16a est concentrique à l'axe 6a du brûleur. Quatre ouvertures de sortie 18 disposées par paires opposées sont réparties autour du fond 16a dans les parties latérales obliques de la paroi frontale 16 selon une disposition entièrement symétrique par rapport à l'axe 6a du brûleur et sont inclinées obliquement vers l'avant en direction de la chambre de chauffe 4 d'une manière telle que les prolongements des axes centraux 18a des ouvertures de sortie 18 se rencontrent tous en un seul point 19 qui se trouve sur l'axe 6a du brûleur ou sur l'axe de la tête 10 du brûleur se trouvant au même endroit.

Les ouvertures de sortie 18 sont, comme le montre clairement la figure 3, formées par une lumière qui donne une surface interne cylindrique 18b de la paroi frontale 10 à titre de limite périphérique des ouvertures de sortie 18. La longueur axiale de la surface interne 18b des ouvertures de sortie 18 est choisie de plusieurs millimètres, dans cet exemple d'environ 8 mm, de telle sorte que, sans mesure supplémentaires, on obtienne une concentration et une orientation suffisantes d'un jet de fluide refoulé à travers les ouvertures de sortie 18. Chaque extrémité des ouvertures de sortie 18 tournées vers la chambre interne 17 de la tête 10 du brûleur se raccorde à une entrée 20 évasée de façon conique qui, de la manière représentée, est disposée en substance parallèlement à l'axe 6a du brûleur par sa surface interne proche de l'axe 6a du brûleur, réduisant ainsi la déviation d'entrée dans les ouvertures 18 du fluide en provenance de la chambre interne 17.

Comme le montrent les figures 2 et 3, les jets de combustible 21 qui traversent les ouvertures de sortie 18 se rencontrent tous exactement au point 19 et produisent en cet endroit un cône de pulvérisation 22 qui, comme on l'a constaté expérimentalement, à la différence des jets pulvérisés dans le sens de l'écoulement devant le point de conjonction 19, est périphériquement tout à fait homogène et contient dans cette répartition homogène des particules de combustible extraordinairement fines. Les raisons de la formation d'un tel cône de pulvérisation net et absolument homogène 22 au moyen de particules de combustible très fines provenant, dans cet exemple, de 4 jets de combustible compacts d'un diamètre chacun de 8 mm ne sont pas encore définitivement éclaircies. Des expériences permettent cependant d'imaginer qu'au point de conjonction 19, les particules d'un jet 21 ne traversent que pour une partie, dans certaines circonstances pour une partie négligeable, les particules d'un autre jet et apparaissent en fait, dans le prolongement du jet 21 en question, dans le cône de pulvérisation 22. Une partie très importante des particules de combustible contenues de façon compacte dans les jets 21 rebondit par contre au point de conjonction 19 et se retrouve dans le cône de pulvérisation 22 dans la zone périphérique dont provenait le jet 21 associé. Dans ce cas, les conditions individuelles de conjonction ou de rebondissement pour chaque particule individuelle sont bien entendu soumises à une répartition statistique telle que l'on obtienne dans l'ensemble une répartition homogène sur toute la section du cône de pulvérisation 22 à partir d'une répartition non homogène dans les jets 21. Sous ce rapport, on peut éventuellement remarquer que l'angle entre les jets 21, lequel dans cet exemple est de 90°, influence évidemment l'angle d'ouverture du cône de pulvérisation 22, mais que celui-ci est légèrement inférieur à l'angle d'impact ou d'incidence des jets 21, lequel dans cet exemple est légèrement supérieur à 80°. Ceci pourrait signifier que les particules contenues dans les jets 21 quittent le point de conjonction 19 sous un angle de sortie inférieur à leur angle d'impact ou d'incidence et réalisent à cet effet le cas échéant dans le sens périphérique des déviations angulaires supplémentaires qui aboutissent à un remplissage homogène du cône de pulvérisation 22.

Des essais d'orientation ont montré que la formation d'un cône de pulvérisation homogène peut en principe être atteinte lorsque l'angle entre chaque jet 21 et l'axe 6a du brûleur ou l'axe de la tête 16 du brûleur mesuré vers la paroi frontale 16, est d'au moins 15°, ce qui donne un cône de pulvérisation 22 relativement étroit, et au plus d'environ 75°, ce qui donne un cône de pulvérisation 22 très ouvert. L'angle entre les jets 21 et l'axe 6a du brûleur est cependant avantageusement réglé dans un domaine compris entre 30° et 60°, de préférence entre 40° et 50°, les meilleurs résultats étant obtenus dans le cas d'application illustré d'un angle de 45°.

Le nombre d'ouvertures de sortie 18 est largement aléatoire, mais il est d'au moins trois. Dans le cas de trois ouvertures de sortie 18 disposées symétriquement, on obtient déjà un cône de pulvérisation homogène 22, tout comme dans le cas de quatre ouvertures de sortie 18 illustré à titre d'exemple ou d'environ six ouvertures de sortie 18. Le choix du nombre des ouvertures de sortie est effectué sur la base d'autres considérations fonctionnelles.

Dans un montage effectivement éprouvé, de l'air de combustion est introduit dans le conduit d'alimentation 9 à une vitesse d'environ 30 m/seconde et du gaz est introduit dans le conduit d'alimentation 7 à une vitesse d'environ 15 m/seconde en direction de la chambre interne 17 de la tête 10 du brûleur. Etant donné que l'air de combustion est préchauffé à environ 600°C, son mélange avec le combustible ne peut s'effectuer que dans la zone de l'embouchure du brûleur pour éviter des allumages précoces. L'air de combustion est admis de la manière illustrée concentriquement autour de la tête 10 du brûleur dont le corps cylindrique 15 est fermé périphériquement, et s'écoule tout d'abord librement par-dessus le bord antérieur de la tête 10 du brûleur dans la zone de la paroi frontale 16.

Une forte dépression règne derrière le bord antérieur de la paroi frontale 16, en raison de la formation des jets 21. A cet effet, l'aire de la section globale des ouvertures de sortie 18 est choisie, par rapport à la section de la chambre interne 17 de la tête de brûleur 10, de manière à déterminer un rapport compris entre environ 1:5 et 1:20, dans cet exemple d'environ 1:10. Une vitesse d'environ 140 m/seconde, soit environ la moitié de la vitesse du son, est ainsi communiquée aux jets 21. Cette vitesse élevée du gaz dans les jets 21 produit dans cet exemple un effet semblable à celui d'une trompe à eau, donc une perte de charge importante au voisinage des surfaces des jets 21. De cette façon, l'air de combustion s'écoulant par-dessus le bord antérieur de la paroi frontale 16 est soumis immédiatement à une dépression extrêmement forte qui fait dévier l'air de combustion fortement vers l'intérieur, en dépit de sa vitesse d'écoulement relativement élevée, comme indiqué schématiquement par des lignes d'écoulement 23 sur la figure 2. L'écoulement de l'air de combustion est de cette façon dirigé sur la surface postérieure du cône de pulvérisation 22 et pénètre presque perpendiculairement et à grande vitesse dans ce cône. On obtient de cette façon un mélange homogène extraordinairement intense et comprenant déjà les plus petits éléments spatiaux considérés entre les particules de combustible très finement divisées et l'air de combustion, de sorte qu'une combustion extrêmement intense et rapide en résulte. Dans l'exemple d'application, la combustion est si forte que rien de la flamme 11 n'est perceptible dans le domaine de la lumière visible et que des prises de vues photographiques de la forme de la flamme ne peuvent être réalisées que dans le domaine ultraviolet. A l'oeil nu il est possible, à partir d'une extrémité de la chambre de chauffe 4 d'environ 15 m de longueur, de reconnaitre des détails de l'extrémité opposée, simplement déformés par de puissants phénomènes de scintillation, tandis qu'avec des brûleurs classiques la distance de visibilité, en raison de la conformation des flammes, est dans tous les cas de quelques décimètres. On a obtenu a peu près la configuration de la flamme 11 illustrée sur la figure 1 qui se termine à une distance nette de l'axe vertical médian 1a de la chambre de chauffe 4, de sorte que l'énergie élevée dans la flamme 11 peut être largement transférée sur la surface 3 de la masse fondue, tandis que dans l'écoulement montant au voisinage de l'axe médian 1a de la chambre de chauffe 4, un refroidissement net des fumées peut déjà se produire de sorte que la surface interne de la voûte 5 est protégée contre une surchauffe excessive et contre l'érosion.

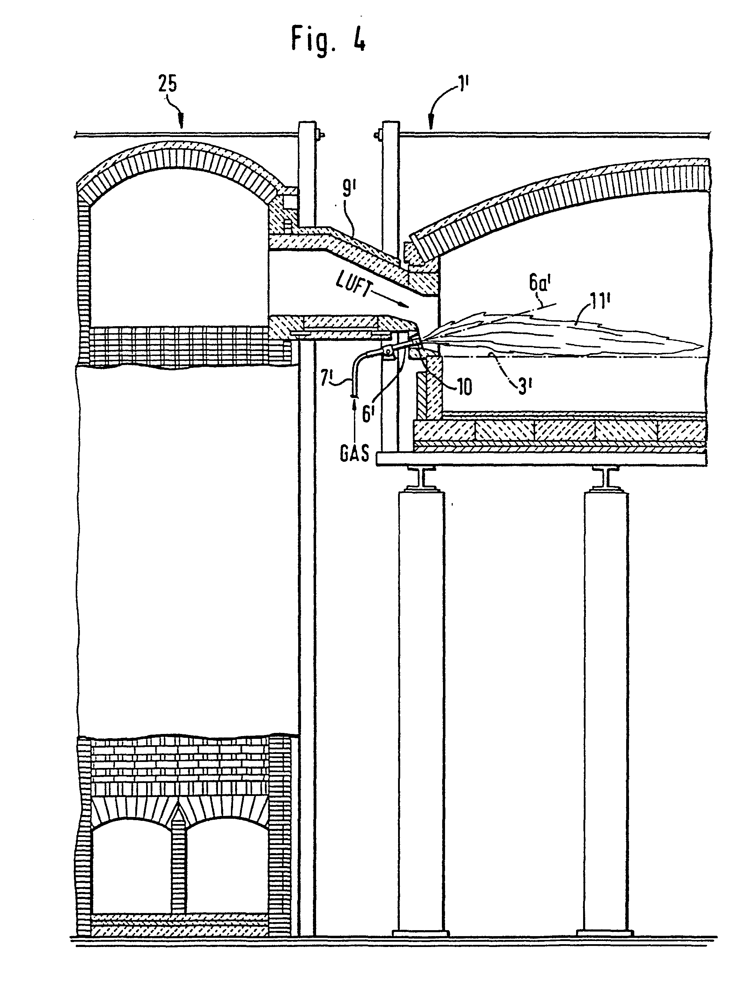

La figure 4 illustre l'invention appliquée à titre d'exemple à un brûleur dit brûleur sous banquette pour un bassin de fusion de verre de récupération 1'. Au bassin de fusion de verre 1' est associé un préchauffeur 25 dans lequel l'air de combustion peut être préchauffé, dans cet exemple à une température élevée d'environ 1200° C. En raison de cette température élevée de l'air de combustion, celui-ci ne peut plus être amené directement à la périphérie de la tête 10 du brûleur non modifiée par rapport à la forme d'exécution précédente. L'alimentation de l'air de combustion s'effectue au contraire par l'intermédiaire d'un conduit d'alimentation maçonné 9' duquel l'air de combustion sort à une vitesse de par exemple 12 m/seconde sous un angle d'environ 22° par rapport au niveau indiqué en 3' de la masse fondue, obliquement vers le bas à partir du haut et en direction de la racine de la flamme 11'. La tête de brûleur 10 du brûleur indiqué en 6' sur le dessin, qui présente un conduit 7' tubulaire d'alimentation de gaz, comporte un axe de brûleur 6'a orienté vers le haut et formant un angle d'environ 11° par rapport à la surface 3'de la masse fondue, de sorte que la tête du brûleur 10 et le cône de pulvérisation formé par cette tête de brûleur sont inclinés vers le haut d'environ la moitié de l'angle sous lequel l'air de combustion sortant est incliné vers le bas. La tête de brûleur 10 est disposée dans la zone inférieure de l'embouchure du conduit d'alimentation 9' en air de combustion et produit à cet edroit, de la manière décrite plus haut, le cône de pulvérisation du combustible pour former la flamme 11', étant entendu qu'une forte dépression est produite immédiatement devant la tête de brûleur 10 de la manière également décrite plus en détail plus haut. Grâce à cette dépression extrême, l'air de combustion provenant du haut du conduit d'alimentation 9' est dévié vers le bas dans le cône de pulvérisation et traverse ce cône d'une manière largement homogène pour garantir de la manière décrite plus haut une combustion rapide.

Il s'est avéré que dans le cas d'une alimentation concentrique de l'air de combustion, à puissance égale de brûleur, on peut obtenir une flamme encore plus courte que dans le cas d'un brûleur sous banquette tel que représenté sur la figure 4. Par rapport à la longueur de flamme extrêmement grande des brûleurs sous banquette habituels, on obtient cependant un raccourcissement très important de la flamme 11' du fait du mélange homogène du combustible et de l'air de combustion déjà obtenu dans la zone de la racine de la flamme, ce qui entraîne une accélération de la combustion.

L'invention n'est pas limitée à l'utilisation de gaz comme combustible, parce que dans le cas d'un combustible liquide ou fluidisé de manière correspondante, on peut par concentration produire également dans les jets 21, un cône de pulvérisation 22 correspondant et que les conditions en présence ne sont pas fondamentalement différentes. Le brûleur 6 ou 6' peut de ce fait en principe aussi être utilisé comme brûleur à pulvérisation, par exemple pour du mazout.

**Revendications**

1. Tête de brûleur, en particulier de brûleur à gaz pour installations de chauffe industrielles, destinée à être fixée à l'extrémité d'un conduit d'alimentation pour combustible comportant un corps cylindrique (15) ayant un canal central, caractérisée en ce que le canal central presente du côté des flammes une paroi frontale (16) délimitant une chambre interne (17) servant de collecteur de combustible, la paroi frontale présentant une série d'au moins trois ouvertures de sortie (18) du combustible, de configuration identique, disposées symétriquement par rapport à l'axe (6a) du corps cylindrique (15), les axes centraux (18a) des ouvertures de sortie (18) se rencontrant en un point (19) situé sur le prolongement de cet axe (6a) et formant avec cet axe, en direction de la paroi frontale (16), des angles aigus égaux et compris entre 15 et 75°.

2. Tête de brûleur selon la revendication 1, caractérisée en ce que les ouvertures de sortie (18) sont au nombre de quatre.

3. Tête de brûleur selon la revendication 1 ou 2, caractérisée en ce que la valeur de l'angle aigu formé entre l'axe central (18a) et l'axe (6a) est comprise entre 40 et 50° et est de préférence égale à 45°.

4. Tête de brûleur suivant une des revendications 1 à 3, caractérisée en ce que les ouvertures de sortie (18) sont délimitées par une surface interne cylindrique (18b) de la paroi frontale (16) présentant une longueur axiale de plusieurs millimètres, et de préférence de plus de 5 mm.

5. Tête de brûleur selon la revendication 4, caractérisée en ce que les ouvertures de sortie (18) présentent un élargissement d'entrée conique du côte de la chambre interne (17).

6. Tête de brûleur suivant une des revendications 1 à 5, caractérisée en ce que le rapport des sections globales des ouvertures de sortie (18) et de la section de la chambre interne (17) est compris entre 1:5 et 1:20 et en particulier de 1:10.

7. Tête de brûleur suivant une des revendications 1 à 6, caractérisée en ce que le corps cylindrique (15) est muni à son extrémité opposée à la paroi frontale (16) d'un pas de vis intérieur (14) destiné à être vissé sur un tube (8) contenant le conduit d'alimentation (7) pour combustible.

8. Brûleur, en particulier brûleur à gaz pour installations de chauffe industrielles comportant une tête de brûleur suivant une des revendications 1 à 7, fixée à l'extrémité d'un conduit d'alimentation en combustible et un conduit d'alimentation en air de combustion présentant une embouchure annulaire entourant concentriquement la tête de brûleur.

9. Brûleur, en particulier brûleur à gaz pour installations de chauffe industrielles comportant une tête de brûleur suivant une des revendications 1 à 7, fixée à l'extrémité d'un conduit d'alimentation en combustible, un conduit d'alimentation maçonné en air de combustion débouchant au niveau de la sortie de la tête du brûleur, et des moyens pour préchauffer l'air de combustion à une température supérieure à 700°C.


**Patentansprüche**

Brennerkopf, insbesondere eines Gasbrenners für industrielle Feuerungsanlagen der am Ende eines Zufürkanals für Brennstoff befestigt wird und einen Zylinderkörper (15) mit einem zentralen Kanal aufweist, dadurch gekennzeichnet, daß der zentrale Kanal auf der Flammenseite eine Stirnwand (16) hat, die einen der Brennstoffvorlage dienenden Innenraum (17) begrenzt, wobei die Stirnwand eine Mehrzahl von mindestens drei untereinander gleich ausgebildeten Austrittsöffnungen (18) für den Brennstoff besitzt, die symmetrisch zur Achse (6a) des Zylinderkörpers (15) angeordnet sind, und daß die Mittelachsen (18a) der Austrittsöffnungen (18) in einem auf der Verlängerung von dieser Achse (6a) liegenden Punkt (19) zusammentreffen und mit dieser Achse zur Stirnwand (16) hin gerichtete gleiche spitze Winkel zwischen 15 und 75° einschließen.

2. Brennerkopf nach Anspruch 1, dadurch gekennzeichnet, daß vier Austrittsöffnungen (18) vorgesehen sind.

3. Brennerkopf nach Anspruch 1 oder 2, dadurch gekennzeichnet, daß der Wert des spitzen Winkels zwischen der Mittelachse (18a) und der Achse (6a) zwischen 40 und 50° und bevorzugt bei 45° liegt.

4. Brennerkopf nach einem der Ansprüche 1 bis 3, dadurch gekennzeinet, daß die Austrittsöffnungen (18), durch eine zylindrische Innenfläche (18b) der Stirnwand (16) mit einer axialen Länge von mehreren Millimetern, insbesondere von mehr als 5 mm begrenzt sind.

5. Brennerkopf nach Anspruch 4, dadurch gekennzeichnet, daß die Austrittsöffnungen (18) auf der Seite des Innenraums (17) eine konische Eintrittserweiterung aufweisen.

6. Brennerkopf nach einem der Ansprüche 1 bis 5, dadurch gekennzeichnet, daß das Verhältnis des Gesamtquerschnittes der Austrittsöffnungen (18) zum Querschnitt des Innenraums (17) zwischen 1 : 5 und 1 : 20, insbesondere bei 1 : 10 liegt.

7. Brennerkopf nach einem der Ansprüche 1 bis 6, dadurch gekennzeichnet, daß der Zylinderkörper (15) an seinem der Stirnwand (16) abgewandten Ende ein Innengewinde (14) zum Aufschrauben auf ein den Zuführkanal (7) für Brennstoff enthaltendes Rohr (8) aufweist.

8. Brenner, insbesondere Gasbrenner für industrielle Feuerungsanlagen mit einem Brennerkopf nach einem der Ansprüche 1 bis 7, der an dem Ende eines Zuführkanals für Brennstoff befestigt ist und mit einem Zuführkanal für Verbrennungsluft, der den Brennerkopf konzentrisch als ringförmige Einmündung umgibt.

9. Brenner, insbesondere Gasbrenner für industrielle Feuerungsanlagen mit einem Brennerkopf nach einem der Ansprüche 1 bis 7, der an dem Ende eines Zuführkanals für Brennstoff befestigt ist und mit einem gemauerten Zuführknmal für Verbrennungsluft, der im Bereich des Brennerkopfausgangs mündet und Mittel zum Vorwärmen der Verbrennungsluft auf eine Temperatur von über 700°C.


**Claims**

1. Burner head, particularly for a gas burner for industrial heating installations and intended to be fixed at the end of a fuel supply pipe, comprising a cylindrical body (15) having a central passage, characterized in that the central passage has, on the flame side, a frontal wall (16) defining an inner chamber (17) serving as a fuel collector, the frontal wall comprising a series of at least three fuel outlet orifices (18), of identical configuration, symmetrically disposed in relation to the axis (6a) of the cylindrical body (15), the central axes of the outlet orifices (18) meeting at a point (19) situated on the extension of this axis (6a) and forming with this axis, in the direction of the frontal wall (16) equal acute angles and comprised between 15 and 75°.

2. Burner head according to Claim 1, characterized in that there are at least four outlet orifices (18).

3. Burner head according to Claim 1 or 2, characterized in that the value of the acute angle formed between the central axis (18a) and the axis (6a) is comprised between 40 and 50° and is preferably equal to 45°.

4. Burner head according to one of Claims 1 to 3, characterized in that the outlet orifices (18) are bounded by a cylindrical inner surface (18b) of the frontal wall (16) having an axial length of several millimeters, and preferably of more than 5 mm.

5. Burner head according to Claim 4, characterized in that the outlet orifices (18) have a widened out conical inlet on the side where the inner chamber (17) is located.

6. Burner head according to one of Claims 1 to 5, characterized in that the ratio of the total of the cross-sections of the outlet orifices (18) and the cross-section of the inner chamber (17) is comprised between 1:5 and 1:20 and in particular 1:10.

7. Burner head according to one of Claims 1 to 6, characterized in that the cylindrical body (15) has, at its end opposite the frontal wall (16) a female screwthread (14) adapted to be screwed onto a tube (8) containing the fuel supply pipe (7).

8. Burner, particularly a gas burner for industrial heating installations, comprising a burner head according to one of Claims 1 to 7, fixed at the end of a fuel supply pipe and a combustion air supply pipe comprising an annular mouth concentrically surrounding the burner head.

9. Burner, particularly a gas burner for industrial heating installations, comprising a burner head according to one of Claims 1 to 7, fixed at the end of a fuel supply pipe, a brick-faced combustion air duct discharging at the level of the burner head outlet, and means for preheating the combustion air to a temperature in excess of 700° C.

# Fig. 1

Fig. 2

0 125 184

3

# Fig. 3

Fig. 4